# EUROPEAN PATENT APPLICATION

(11) **EP 1 686 825 A2**
(43) Date of publication of application: **02.08.2006**
(21) Application number: 06001622.7
(22) Date of filing: 26.01.2006
(51) Int. Cl.: H04Q 7/38

(54) **Method and mobile terminal for securely transmitting a mobile subscriber identifier**

(30) Priority: 28.01.2005 KR 2005008221
(71) Applicant: LG Electronics Inc., Yongdungpo-Gu Seoul (KR)
(72) Inventor: Lim, Yang-Taek, Gwangsan-Gu, Gwangju (KR)
(74) Representative: Katérle, Axel

(57) **Abstract**

Disclosed is a method for securely transmitting a mobile subscriber identifier in a mobile communications system. The method includes coding a mobile subscriber identifier with a public key, generating a first message authentication code (MAC), transmitting the coded mobile subscriber identifier and the first MAC, receiving the mobile subscriber identifier and the first MAC, decoding the coded mobile subscriber identifier, and determining the validity of the decoded mobile subscriber identifier.

## Description

This application claims the benefit of Korean Application No. 10-2005-08221, filed on January 28, 2005, which is hereby incorporated by reference in its entirety.

### BACKGROUND OF THE INVENTION

### 1. Field of the Invention

The present invention relates to a method and a mobile terminal for securely transmitting a mobile subscriber identifier in a mobile communications system.

### 2. Description of the Related Art

IMT-2000 is a global standard for third generation (3G) wireless communications which utilizes a Wideband Code Division Multiple Access (WCDMA) air interface and Global System for Mobile communication (GSM) infrastructures, including General Packet Radio Service (GPRS). GPRS, an asynchronous communications service, utilizes a Mobile Switching Center (MSC), a Gateway Mobile Switching Center (GMSC), a Service GPRS Support Node (SGSN), and a Gateway GPRS Support Node (GGSN) in its core network. The wireless access network includes a UMTS Terrestrial Radio Access Network (UTRAN), which includes a Node B and a Radio Network Controller (RNC).

A terminal used in an asynchronous 3G mobile communication system typically includes mobile equipment (ME) and a UMTS Subscriber Identity Module (USIM). In an asynchronous 3G mobile communications system, a mobile subscriber is authenticated by the mobile communications system based upon an International Mobile Subscriber Identifier (IMSI) that the terminal transmits to the mobile communications system.

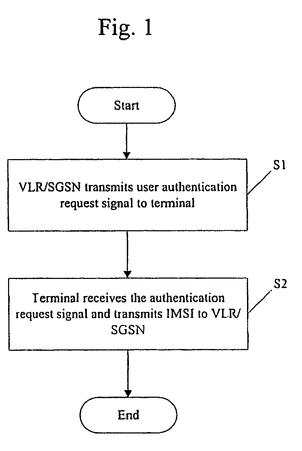

Figure 1 is a flow chart of a authentication process performed in a related art WCDMA asynchronous 3G mobile communications system.

With reference to Figure 1, when a Visitor Location Register (VLR)/SGSN, which manages subscriber position information of an SGSN, transmits a user authentication request signal to a mobile terminal (ME/USIM) (step S1), the mobile terminal transmits an IMSI stored in the USIM of the terminal to the VLR/SGSN (step S20), thereby allowing the mobile subscriber to be authenticated. This authentication process is described in 3GPP Specification 33.102.

According to this process, the subscriber's IMSI is transmitted to the mobile communication system without being encoded. Since the IMSI is not encoded, it is susceptible to being stolen by a third party when it is transmitted across the air interface.

To solve the above-described problems, a method and a mobile terminal for securely transmitting a mobile subscriber identifier is provided.

### SUMMARY OF THE INVENTION

In view of the foregoing, the present invention, through one or more of its various aspects, embodiments, and/or specific features or sub-components, is thus intended to bring out one or more of the advantages as specifically noted below.

An object of the present invention is to provide a method for securely transmitting a mobile subscriber identifier in a mobile communications system.

To achieve at least the above objects in whole or in part, there is provided a method for securely transmitting a mobile subscriber identifier in a mobile communications system, which includes: coding, by a mobile terminal, a mobile subscriber identifier with a public key, transmitting the mobile subscriber identifier to a mobile subscriber system, receiving, by the mobile subscriber system, the coded mobile subscriber identifier, decoding the mobile subscriber identifier; and determining the validity of the received mobile subscriber identifier.

The public key may be generated and included in a system information broadcast (SIB) message which is transmitted. The SIB message including the public key may be transmitted by a UMTS terrestrial radio access network (UTRAN). The public key may be generated in a Visitor Location Register/Service GPRS Service Node (VLR/SGSN). The VLR/SGSN may be a system used in an asynchronous 3G mobile communications system.

The first MAC may be generated by a MAC algorithm in a mobile terminal. The first MAC be a generated with the public key.

The mobile subscriber identifier may be decoded by a VLR/SGSN. Determining the validity of the mobile subscriber identifier may include generating a second MAC using the decoded mobile subscriber identifier and determining whether the second MAC is identical to the first MAC. If the first and second MACs are identical, the received mobile subscriber identifier may be determined to be valid, whereas if the first and second MACs are not identical, the received mobile subscriber identifier may be determined to be invalid.

The mobile subscriber identifier may include an International Mobile Subscriber Identifier (IMSI), and the mobile communications system may include a WCDMA asynchronous third-generation (3G) mobile communications system.

Another object of the present invention is to provide a mobile terminal for securely transmitting a mobile subscriber identifier in a mobile communications system.

To achieve at least these advantages in whole or in parts, there is further provided a mobile terminal for securely transmitting a mobile subscriber identifier to -a -mobile communication system, the mobile terminal codes a mobile subscriber identifier with a public key provided by the system, generates a first message authentication code (MAC) by using a public key algorithm and the coded mobile subscriber identifier, and transmits the coded mobile subscriber identifier and the first MAC to the system.

The public key may be generated in a VLR/SGSN of the system and included in an SIB message and transmitted to the terminal through a UTRAN.

The coded mobile subscriber identifier and the first MAC may be used to determine validity of the mobile subscriber identifier in the system.

The system may decode the coded mobile subscriber identifier with a secret key, generate a second MAC by using the decoded mobile subscriber identifier and the public key MAC algorithm, and determine the validity of the mobile subscriber identifier according to whether or not the first MAC and the second MAC are identical, and only when the first and second MACs are identical, the system may accept the decoded mobile subscriber identifier.

Additional advantages, objects, and features of the invention will be set forth in part in the description which follows and in part will become apparent to those having ordinary skill in the art upon examination of the following description or may be learned from practice of the invention. The objects and advantages of the invention may be realized and attained as particularly pointed out in the appended claims.

### BRIEF DESCRIPTION OF THE DRAWINGS

The present invention is further described in the detailed description that follows, by reference to the noted drawings by way of non-limiting examples of embodiments of the present invention, in which like reference numerals represent similar parts throughout several views of the drawing, and in which:
Figure 1 is a flow chart of a related art authentication process;
Figure 2 is a flow chart of a method for securely transmitting a mobile subscriber identifier according to an embodiment of the present invention;
Figure 3 is a block diagram showing the coding of a mobile subscriber identifier according to an embodiment of the present invention; and
Figure 4 is a block diagram showing the decoding and validity determination of a mobile subscriber identifier according to an embodiment of the present invention.

### DETAILED DESCRIPTION OF THE PREFERRED EMBODIMENTS

The present inventors disclose herein a method for transmitting a mobile subscriber identifier with improved security, using the combination of a public key and a secret key (or private key).

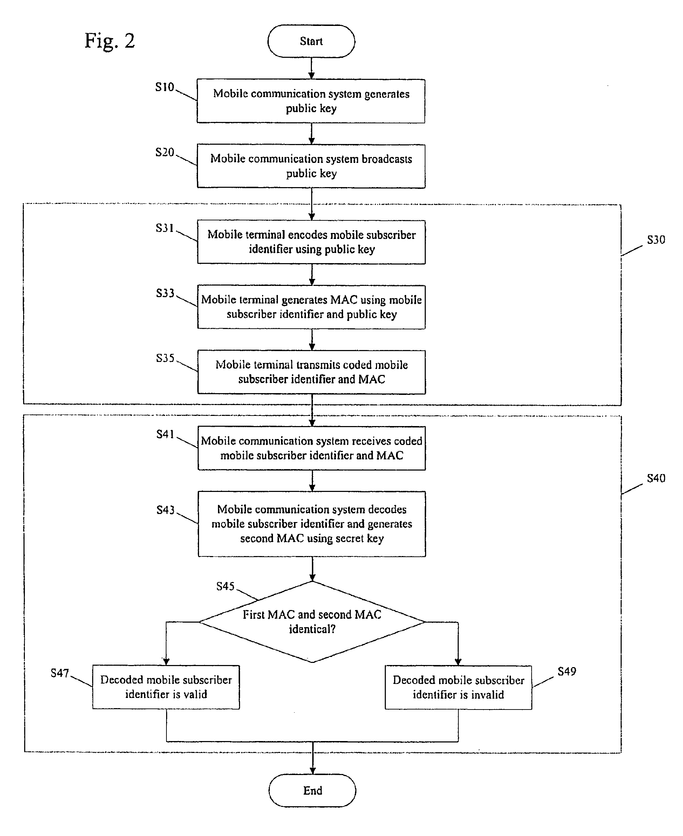

A method for securely transmitting a mobile subscriber identifier according to an embodiment of the present invention is described below with reference to Figure 2.

The method illustrated in Figure 2 is generally divided into two parts, a coding/transmitting part (step S30), and a receiving/decoding part (step S40). More particularly, the method illustrated in Figure 2 includes coding a mobile subscriber identifier by a mobile terminal and transmitting the mobile subscriber identifier to a mobile communication system (step S30), and decoding the mobile subscriber identifier by the mobile communication system and determining its validity (step S40).

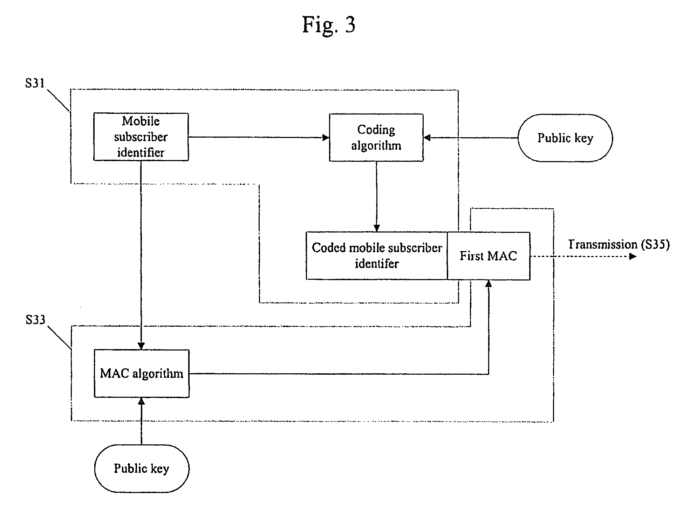

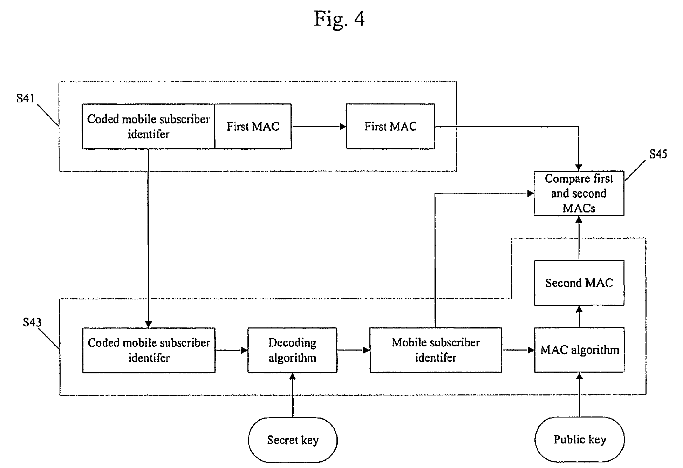

Figure 3 illustrates the coding and transmission processes of step S30 in more detail, and Figure 4 illustrates the decoding and validity determination processes of step S40 in more detail.

The present invention will now be described in more detail with reference to Figures 2 to 4.

According to an embodiment of the present invention, a mobile communication system generates a public key and a secret key (step S10). The mobile communication system may be, for example, a WCDMA asynchronous 3G mobile communication system, -and may include a VLR/SGSN which generates the public and secret keys, for example. The generated public key is provided to a radio access network, such as, but not limited to, a UTRAN, and is then broadcast by the radio access network (step S20). For example, the public key may be included in a specific system information broadcast (SIB) message which is broadcast by the radio access network. The public key broadcast by the radio access network is received by a mobile terminal, and is subsequently used when the mobile terminal attempts to authenticate itself to the mobile communication system.

To authenticate itself to the mobile communication system, the mobile terminal encodes a mobile subscriber identifier stored in the mobile terminal, such as an IMSI, with a coding algorithm that utilizes the received public key to encode the mobile subscriber identifier (step S31). For improved security, the mobile terminal uses a message authentication code (MAC) algorithm to generate a first MAC based upon the mobile subscriber identifier and the received public key (step S33). The mobile terminal then adds the coded mobile subscriber identifier and the first MAC together and transmits them to the mobile communication system (step S35). According to one embodiment of the invention, the coded mobile subscriber identifier and the first MAC may be sent to a VLR/SGSN of a mobile communication system. As described above, the public key is used both for coding the mobile subscriber identifier and for generating the first MAC.

With reference to Figure 4, the mobile communication system receives the coded mobile subscriber identifier and the first MAC transmitted by the mobile terminal and separates the coded mobile subscriber identifier from the first MAC (step S41). The mobile communication system then decodes the coded mobile subscriber identifier with a decoding algorithm utilizing a secret key, and generates a second MAC with a MAC algorithm based upon the decoded mobile subscriber identifier and the public key which was transmitted to the mobile terminal (step S43). To determine whether the decoded mobile subscriber identifier is valid, the mobile communication system compares the first MAC with the second MAC (step S45). If the first and second MACs are identical, the mobile communication system determines that the decoded mobile subscriber identifier is valid (step S47). If, however, the first and second MACs are not identical, the mobile communication system determines that the decoded mobile subscriber identifier is invalid (step S49). According to one embodiment of the invention, each of steps S41-S49 may be performed, for example, by a VLR/SGSN of the mobile communication system. According to the above described method, mobile subscriber authentication may be securely performed, since the described coding method greatly reduces the ability of a third party to steal a mobile subscriber identifier transmitted over an air interface.

The foregoing embodiments and advantages are merely exemplary and are not to be construed as limiting the present invention. The present teaching can be readily applied to other types of apparatuses than those described. The description of the present invention is intended to be illustrative, and not to limit the scope of the claims. Many alternatives, modifications, and variations will be apparent to those skilled in the art.

In an embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionalities as described herein.

The present disclosure contemplates a computer-readable medium that includes instructions or receives and executes instructions responsive to a propagated signal. The term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile rewritable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is equivalent to a tangible storage medium. Accordingly, the disclosure is considered to include any one or more of a computer-readable medium or a distribution medium and other equivalents and successor media, in which data or instructions may be stored.

Although the present specification describes components and functions that may be implemented in particular embodiments with reference to particular standards and protocols, the invention is not limited to such standards and protocols. Each of the standards, protocols and languages represent examples of the state of the art. Such standards are periodically superseded by faster or more efficient equivalents having essentially the same functions. Accordingly, replacement standards and protocols having the same or similar functions are considered equivalents thereof.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The above disclosed subject matter is to be considered illustrative, and not restrictive, and the appended claims are intended to cover all such modifications, enhancements, and other embodiments which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

Although the invention has been described with reference to several exemplary embodiments, it is understood that the words that have been used are words of description and illustration, rather than words of limitation. As the present invention may be embodied in several forms without departing from the spirit or essential characteristics thereof, it should also be understood that the above-described embodiments are not limited by any of the details of the foregoing description, unless otherwise specified. Rather, the above-described embodiments should be construed broadly within the spirit and scope of the present invention as defined in the appended claims. Therefore, changes may be made within the metes and bounds of the appended claims, as presently stated and as amended, without departing from the scope and spirit of the invention in its aspects.

## Claims

1. A method for securely transmitting a mobile subscriber identifier in a mobile communications system, comprising:
coding, by a mobile terminal, a mobile subscriber identifier with a public key;
transmitting the mobile subscriber identifier to a mobile subscriber system; receiving, by the mobile subscriber system, the coded mobile subscriber identifier;
decoding the mobile subscriber identifier; and
determining the validity of the received mobile subscriber identifier.

2. The method according to claim 1, wherein the public key is generated by the mobile communications system and included in a system information broadcast (SIB) message, and the mobile communications system transmits the SIB message to the mobile terminal.

3. The method according to claim 2, wherein the SIB message including the public key is transmitted by a UMTS terrestrial radio access network (UTRAN).

4. The method according to claim 1, wherein the mobile communications system is a VLR(Visitor Location Register)/SGSN(Service GPRS Service Node).

5. The method according to claim 1, further comprising generating a first message authentication code (MAC) using the mobile subscriber identifier and a public key MAC algorithm.

6. The method according to claim 5, wherein determining the validity of the received mobile subscriber identifier comprises generating a second MAC using the decoded mobile subscriber identifier and the public key MAC algorithm, and determining whether the second MAC is identical to the first MAC.

7. The method according to claim 6, wherein if the first and second MACs are identical, the received mobile subscriber identifier is determined to be valid, and if the first and second MACs are not identical, the received mobile subscriber identifier is determined to be invalid.

8. The method according to claim 4, wherein the first MAC is generated by the mobile terminal and then transmitted together with the coded mobile subscriber identifier to the mobile communication system.

9. The method according to claim 1, wherein the received mobile subscriber identifier is decoded using a secret key decoding algorithm.

10. The method according to claim 1, wherein the mobile subscriber identifier is decoded by a VLR/SGSN.

11. A computer-readable medium, comprising a program for securely transmitting a mobile subscriber identifier in a mobile communication system, the program comprising instructions for:
receiving a coded mobile subscriber identifier and a first message authentication code (MAC);
decoding the coded mobile subscriber identifier; and
determining the validity of the decoded mobile subscriber identifier.

12. The computer-readable medium according to claim 11, wherein the program further comprises instructions for:
generating a public key; and
transmitting the public key.

13. The computer-readable medium according to claim 11, wherein the instructions for determining the validity of the decoded mobile subscriber identifier comprise instructions for:
generating a second MAC using the decoded mobile subscriber identifier and a public key; and
comparing the first MAC to the second MAC.

14. The computer-readable medium according to claim 13, wherein the instructions for determining the validity of the decoded mobile subscriber identifier comprise instructions for:
determining that the decoded mobile subscriber identifier is valid if the first MAC and the second MAC are identical; and
determining that the decoded mobile subscriber identifier is invalid if the first MAC and the second MAC are not identical.

15. A mobile terminal for securely transmitting a mobile subscriber identifier to a mobile communication system, the mobile terminal codes a mobile subscriber identifier with a public key provided by the system, generates a first message authentication code (MAC) by using a public key algorithm and the coded mobile subscriber identifier, and transmits the coded mobile subscriber identifier and the first MAC to the system.

16. The terminal according to claim 15, wherein the public key is generated in a VLR/SGSN of the system and included in an SIB message and transmitted to the terminal through a UTRAN.

17. The terminal according to claim 15, wherein the coded mobile subscriber identifier and the first MAC are used to determine validity of the mobile subscriber identifier in the system.

18. The terminal according to claim 17, wherein the system decodes the coded mobile subscriber identifier with a secret key, generates a second MAC by using the decoded mobile subscriber identifier and the public key MAC algorithm, and determines the validity of the mobile subscriber identifier according to whether or not the first MAC and the second MAC are identical, and only when the first and second MACs are identical, the system accepts the decoded mobile subscriber identifier.
